# EUROPÄISCHE PATENTSCHRIFT

(11) **EP 2 797 783 B1**
(45) Veröffentlichungstag und Bekanntmachung des Hinweises auf die Patenterteilung: **10.10.2018**
(21) Anmeldenummer: 12784261.5
(22) Anmeldetag: 13.11.2012
(51) Int. Cl.: B60S 1/38, B60S 1/40

(54) **WISCHBLATTVORRICHTUNG**
WIPER BLADE DEVICE
DISPOSITIF D'ESSUIE-GLACE

(30) Priorität: 27.12.2011 DE 102011089933
(43) Veröffentlichungstag der Anmeldung: 05.11.2014
(73) Patentinhaber: Robert Bosch GmbH, 70442 Stuttgart (DE)
(72) Erfinder: BENNER, Andreas, 111 Shilin Taipei City, (TW); BAUMERT, Stefan, 76139 Karlsruhe (DE); HOLLERBACH, Bernd, 74731 Walldürn (DE); PICHLER, Andreas, 76646 Bruchsal (DE)
(86) Internationale Anmeldenummer: PCT/EP2012/072463
(87) Internationale Veröffentlichungsnummer: WO 2013/097969

(56) Entgegenhaltungen:
- EP-A1- 0 895 907
- DE-A1- 4 224 866
- DE-U1- 8 522 252
- US-A1- 2006 272 119
- US-A1- 2007 226 940

## Beschreibung

### Stand der Technik

Die Erfindung geht aus von einer Wischvorrichtung nach dem Oberbegriff des Patentanspruchs 1.

Aus der BR 7 701 706 U ist ein Heckwischer bekannt, welcher einen Wischarm und eine Wischvorrichtung mit einem Wischblatt und einer Adaptereinheit umfasst. Der Wischarm ist mittels der Adaptereinheit mit einer Wischleistenhalteeinheit des Wischblatts verbindbar. Die Wischleistenhalteeinheit ist dabei als ein Mittelbügel ausgebildet, welcher über zwei Krallenbügel eine Wischleiste fixiert. In einem montierten Zustand ist die Adaptereinheit fest mit dem Wischarm und drehbar mit dem Mittelbügel verbunden. Die Adaptereinheit weist hierzu zwei seitlich nach innen angeformte Lagerstifte auf, welche in korrespondierende Lageröffnungen an Seitenwänden des Mittelbügels eingreifen. US-A-2006/0272119 offenbart den Oberbegriff des Anspruchs 1.

### Offenbarung der Erfindung

Die Erfindung geht aus von einer Wischvorrichtung, insbesondere einer Heckwischvorrichtung, mit einer Wischleistenhalteeinheit, wenigstens einem an der Wischleistenhalteeinheit angeordneten ersten Lagerelement und einer Adaptereinheit, welche zumindest ein zweites Lagerelement umfasst, das in wenigstens einem montierten Zustand zusammen mit dem ersten Lagerelement ein Drehlager mit einer Drehachse bildet, und welche die Wischleistenhalteeinheit in einer zur Drehachse zumindest im Wesentlichen parallelen Richtung zumindest teilweise umgreift.

Es wird vorgeschlagen, dass das zweite Lagerelement das erste Lagerelement in wenigstens einer zur Drehachse zumindest im Wesentlichen senkrechten Richtung zumindest teilweise umgreift. Unter einer "Wischleistenhalteeinheit" soll in diesem Zusammenhang insbesondere eine Einheit eines Wischblatts, insbesondere eines Heckwischblatts, verstanden werden, welche in wenigstens einem montierten Zustand eine Wischleiste des Wischblatts fixiert, insbesondere auch mittelbar. Bei der Wischleistenhalteeinheit kann es sich insbesondere um eine Federleiste eines gelenkfreien Wischblatts oder vorzugsweise um einen Hauptbügel und/oder einen Mittelbügel eines wenigstens ein Gelenk aufweisenden Wischblatts, insbesondere eines Heckwischblatts, handeln. Unter einer "Federleiste" soll in diesem Zusammenhang insbesondere ein Element verstanden werden, das zumindest eine Erstreckung aufweist, die in wenigstens einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Hauptbügel" soll in diesem Zusammenhang insbesondere eine Einheit des Wischblatts verstanden werden, welche in wenigstens einem montierten Zustand, insbesondere in Längsrichtung betrachtet in einem mittleren Bereich, insbesondere über die Adaptereinheit mit einem Wischarm verbunden ist, und welche an zwei Endbereichen jeweils über wenigstens einen Krallenbügel die Wischleiste des Wischblatts trägt, insbesondere auch mittelbar. Unter einem "Mittelbügel" soll insbesondere eine Einheit des Wischblatts verstanden werden, welche in wenigstens einem montierten Zustand, insbesondere in Längsrichtung betrachtet in einem mittleren Bereich, entweder insbesondere über die Adaptereinheit mit einem Wischarm verbunden ist, oder insbesondere an einem Ende eines Hauptbügels mit dem Hauptbügel verbunden ist, und welche an zwei Endbereichen jeweils über wenigstens einen Krallenbügel und vorzugsweise jeweils über genau einen Krallenbügel die Wischleiste des Wischblatts trägt. Unter einem "Krallenbügel" soll insbesondere eine Einheit des Wischblatts verstanden werden, welche in wenigstens einem montierten Zustand, insbesondere in Längsrichtung betrachtet in einem mittleren Bereich, mit einem Hauptbügel und/oder einem Mittelbügel verbunden ist und welche an zwei Endbereichen jeweils wenigstens eine Kralle zu einer Befestigung der Wischleiste aufweist. Darunter, dass das erste Lagerelement an der Wischleistenhalteeinheit "angeordnet" ist, soll insbesondere verstanden werden, dass das erste Lagerelement in wenigstens einem vormontierten Zustand mit der Wischleistenhalteeinheit verbunden ist. Unter einem "vormontierten Zustand" soll hier und im Folgenden insbesondere ein Zustand verstanden werden, bei welchem die Adaptereinheit in einem unmittelbar folgenden Einzelschritt mit der Wischleistenhalteeinheit verbindbar ist, insbesondere durch ein Einrasten, vorzugsweise des ersten Lagerelements in das zweite Lagerelement. Unter einem "Lagerelement" soll in diesem Zusammenhang insbesondere ein Element verstanden werden, welches Teils eines Lagers, insbesondere des Drehlagers, ist. Unter einem "Drehlager" soll insbesondere ein Lager verstanden werden, welches ein erstes Element, insbesondere eine Welle und/oder eine Achse, vorzugsweise das erste Lagerelement, und ein zweites Element, insbesondere eine Wellen- und/oder Achsaufnahme, vorzugsweise das zweite Lagerelement, miteinander verbindet, wobei das erste Element relativ zum zweiten Element insbesondere um eine Drehachse drehbar ist. Unter einer "Adaptereinheit" soll insbesondere eine Einheit verstanden werden, welche einen Kontaktbereich zum Wischarm aufweist, mit dem Wischarm in wenigstens einem montierten Zustand unverlierbar und vorzugsweise zumindest im Wesentlichen drehfest verbunden ist und insbesondere dazu vorgesehen ist, einen Kopplungsbereich für eine Kopplung zwischen dem Wischarm und dem Wischblatt bereitzustellen. Unter "vorgesehen" soll insbesondere speziell ausgelegt und/oder ausgestattet verstanden werden. Unter "zumindest im Wesentlichen drehfest verbunden" soll insbesondere derart verbunden verstanden werden, dass in wenigstens einem montierten Zustand eine maximal mögliche Änderung einer Winkelorientierung einer ersten Einheit relativ zu einem Kontaktbereich einer zweiten Einheit mit der ersten Einheit höchstens 10°, insbesondere maximal 5°, vorzugsweise höchstens 3° und besonders vorteilhaft maximal 1° beträgt. Insbesondere umfasst die Adaptereinheit zumindest zwei Seitenwände, welche in wenigstens einem montierten Zustand eine Bewegung der Wischleistenhalteeinheit in einer zur Drehachse parallelen Richtung begrenzen. Unter einem "montierten Zustand" soll insbesondere ein Zustand verstanden werden, in welchem die Adaptereinheit an der Wischleistenhalteeinheit und vorzugsweise auch am Wischarm montiert ist. Unter einer zur Drehachse "zumindest im Wesentlichen parallelen Richtung" soll insbesondere eine Richtung verstanden werden, welche mit der Drehachse einen kleinsten Winkel von höchstens 15°, insbesondere von maximal 10°, vorzugsweise von höchstens 5° und besonders vorteilhaft von maximal 1° einschließt. Unter einer zur Drehachse "zumindest im Wesentlichen senkrechten Richtung" soll insbesondere eine Richtung verstanden werden, welche mit der Drehachse einen Winkel einschließt, der um höchstens 15°, insbesondere um maximal 10°, vorzugsweise um höchstens 5° und besonders vorteilhaft um maximal 1° von einem rechten Winkel abweicht. Darunter, dass eine erste Einheit eine zweite Einheit "in einer Richtung zumindest teilweise umgreift", soll insbesondere verstanden werden, dass zumindest eine zur Richtung parallele Gerade existiert, welche zumindest einen Schnittpunkt mit der ersten Einheit und wenigstens einen Schnittpunkt mit der zweiten Einheit aufweist, wobei zwei äußere Schnittpunkte der Geraden mit den Einheiten Schnittpunkte mit der ersten Einheit sind. Unter einem "äußeren Schnittpunkt" der Geraden mit den Einheiten soll in diesem Zusammenhang insbesondere ein Punkt verstanden werden, welcher einen insbesondere zusammenhängenden und insbesondere begrenzten ersten Bereich der Geraden, welcher Schnittpunkte mit den Einheiten aufweist, von einem zusammenhängenden und unendlich ausgedehnten zweiten Bereich der Geraden, welcher frei von Schnittpunkten mit den Einheiten ist, trennt. Durch eine solche Ausgestaltung kann eine vorteilhaft hohe Stabilität einer Verbindung des Wischblatts mit dem Wischarm erreicht werden, insbesondere durch vorteilhaft große Lagerflächen des Drehlagers. Ferner kann eine vorteilhaft einfache Montage ermöglicht werden. Des Weiteren kann eine vorteilhafte Schnittstelle zu einem bestehenden Wischarm für eine Verbindung mit einem beliebigen Wischblatt bereitgestellt werden.

Ferner wird vorgeschlagen, dass die Wischleistenhalteeinheit wenigstens zwei zumindest im Wesentlichen zur Drehachse senkrechte Seitenwände umfasst, welche von der Adaptereinheit einzeln in wenigstens einem montierten Zustand in einer zur Drehachse zumindest im Wesentlichen parallelen Richtung zumindest teilweise umgriffen sind. Unter einer "zumindest im Wesentlichen zur Drehachse senkrechten Seitenwand" soll in diesem Zusammenhang insbesondere eine Wand verstanden werden, dessen Haupterstreckungsebene eine Normale aufweist, die in eine zur Drehachse zumindest im Wesentlichen parallele Richtung gerichtet ist. Unter einer "Haupterstreckungsebene" einer Einheit soll insbesondere eine Ebene verstanden werden, die unter allen Ebenen eine größte Menge an Schnittpunkten mit der Einheit aufweist. Sollten mehrere Ebenen eine größte Menge an Schnittpunkten aufweisen, soll insbesondere eine Ebene, welche die Einheit schneidet und zu allen diesen Ebenen, insbesondere zu Schnittgeraden beliebiger Paare dieser Ebenen, einen geringsten mittleren Abstand aufweist, als Haupterstreckungsebene verstanden werden. Darunter, dass die Seitenwände von der Adaptereinheit "einzeln in wenigstens einem montierten Zustand in einer zur Drehachse zumindest im Wesentlichen parallelen Richtung zumindest teilweise umgriffen sind", soll insbesondere verstanden werden, dass zumindest eine zur Richtung parallele Gerade existiert, welche jeweils einen Schnittpunkt mit einer ersten Seitenwand der zwei Seitenwände, wenigstens einen Schnittpunkt mit einer zweiten Seitenwand der zwei Seitenwände und zumindest einen Schnittpunkt mit der Adaptereinheit aufweist, wobei zwei äußere Schnittpunkte der Geraden Schnittpunkte mit der Adaptereinheit sind und zwischen einem Schnittpunkt der Geraden mit der ersten Seitenwand und einem Schnittpunkt der Geraden mit der zweiten Seitenwand wenigstens ein Schnittpunkt der Geraden mit der Adaptereinheit liegt. Hierdurch kann eine Stabilität einer Befestigung des Wischblatts am Wischarm besonders vorteilhaft gestaltet werden.

In einer bevorzugten Ausgestaltung der Erfindung wird vorgeschlagen, dass das erste Lagerelement zumindest teilweise als ein Lagerbolzen ausgebildet ist. Unter einem "Lagerbolzen" soll in diesem Zusammenhang insbesondere ein Bauelement verstanden werden, welches zumindest eine Längserstreckung aufweist, die zumindest 2-mal, insbesondere wenigstens 3-mal und vorzugsweise mindestens 4-mal so groß ist wie eine zur Längserstreckung senkrechte maximale Quererstreckung des Bauelements. Unter einer "Längserstreckung" eines Elements soll insbesondere eine längste Erstreckung des Elements verstanden werden, welche insbesondere parallel zu einer Haupterstreckungsebene des Elements angeordnet ist. Vorzugsweise ist der Lagerbolzen zumindest teilweise stabförmig, wobei eine Querschnittsfläche des Lagerbolzens von einem Kreis abweichen kann. Besonders vorteilhaft ist der Lagerbolzen zumindest teilweise und vorzugsweise zu wenigstens einem Großteil zylindrisch ausgebildet. Darunter, dass der Lagerbolzen "zu wenigstens einem Großteil zylindrisch" ausgebildet ist, soll insbesondere verstanden werden, dass sich der Lagerbolzen mit einem Volumenanteil von höchstens 20 %, insbesondere von maximal 15 %, vorzugsweise von höchstens 10 % und besonders vorteilhaft von maximal 5 % von einem Zylinder unterscheidet. Insbesondere ist das zweite Lagerelement zumindest teilweise als eine Lagerschale, insbesondere als eine Achs- und/oder Wellenaufnahme, ausgebildet. Hierdurch kann ein vorteilhaft einfaches Drehlager bereitgestellt werden, welches insbesondere eine hohe Stabilität aufweist.

In einer besonders bevorzugten Ausgestaltung der Erfindung wird vorgeschlagen, dass das erste Lagerelement in wenigstens einem vormontierten Zustand zumindest translatorisch wenigstens weitgehend fest mit der Wischleistenhalteeinheit verbunden ist. Darunter, dass das erste Lagerelement "zumindest translatorisch wenigstens weitgehend fest" mit der Wischleistenhalteeinheit verbunden ist, soll insbesondere verstanden werden, dass das erste Lagerelement derart mit der Wischleistenhalteeinheit verbunden ist, dass zumindest eine translatorische Relativbewegung zwischen dem ersten Lagerelement und der Wischleistenhalteeinheit wenigstens weitgehend unterbunden ist. Darunter, dass eine translatorische Relativbewegung zwischen dem ersten Lagerelement und der Wischleistenhalteeinheit "wenigstens weitgehend unterbunden ist", soll insbesondere verstanden werden, dass in wenigstens einem vormontierten Zustand eine maximal mögliche Änderung einer Position des ersten Lagerelements relativ zur Wischleistenhalteeinheit höchstens 1 mm, insbesondere maximal 0,75 mm, vorzugsweise höchstens 0,5 mm und besonders vorteilhaft maximal 0,25 mm beträgt. Insbesondere kann jedoch eine Drehbewegung zwischen dem ersten Lagerelement und der Wischleistenhalteeinheit auftreten, insbesondere eine Drehbewegung um die Drehachse. Vorzugsweise ist das erste Lagerelement in wenigstens einem vormontierten Zustand wenigstens weitgehend fest mit der Wischleistenhalteeinheit verbunden. Darunter, dass das erste Lagerelement und die Wischleistenhalteeinheit "wenigstens weitgehend fest" verbunden sind, soll insbesondere verstanden werden, dass das erste Lagerelement und die Wischleistenhalteeinheit sowohl translatorisch wenigstens weitgehend fest als auch zumindest weitgehend drehfest verbunden sind. Unter "zumindest weitgehend drehfest" verbunden, soll insbesondere derart verbunden verstanden werden, dass in wenigstens einem vormontierten Zustand eine maximal mögliche Änderung einer Winkelorientierung höchstens 10°, insbesondere maximal 5°, vorzugsweise höchstens 1° und besonders vorteilhaft maximal 0,5° beträgt. Hierdurch kann eine Montage vorteilhaft weiter vereinfacht werden. Wenn das erste Lagerelement mit der Wischleistenhalteeinheit unverlierbar verbunden ist, insbesondere durch eine Nietverbindung und/oder durch eine stoffschlüssige Verbindung oder durch ein Anformen, kann eine Bauteilanzahl reduziert werden.

Vorteilhaft ist das zweite Lagerelement zumindest teilweise als ein Rastverbindungselement ausgebildet. Unter einem "Rastverbindungselement" soll insbesondere ein Element zu einer Herstellung einer Rastverbindung verstanden werden. Insbesondere kann es sich bei dem Rastverbindungselement um ein elastisches Rastverbindungselement oder um ein zumindest weitgehend unelastisches Rastelement handeln. Unter einem "elastischen Rastverbindungselement" soll dabei insbesondere ein Element verstanden werden, welches bei zumindest einem Befestigungsvorgang wenigstens eine Erstreckung insbesondere entgegen einer Rückstellkraft zumindest wesentlich ändert, insbesondere elastisch ausgelenkt wird, um insbesondere anschließend durch die Rückstellkraft, insbesondere eine innere Spannkraft, in und/oder hinter ein korrespondierendes Rastverbindungselement, insbesondere ein zumindest weitgehend unelastisches Rastverbindungselement, einzurasten. Darunter, dass sich eine Erstreckung "zumindest wesentlich ändert", soll insbesondere verstanden werden, dass sich die Erstreckung beim Befestigungsvorgang um mehr als 1 %, insbesondere um zumindest 5 %, vorzugsweise um wenigstens 10 % und besonders vorteilhaft um mindestens 20 % ändert. Unter einem "zumindest weitgehend unelastischen Rastverbindungselement" soll in diesem Zusammenhang insbesondere ein Rastverbindungselement verstanden werden, dessen Erstreckungen sich bei zumindest einem Befestigungsvorgang um höchstens 1 %, insbesondere um maximal 0,75 %, vorzugsweise um höchstens 0,5 % und besonders vorteilhaft um maximal 0,25 % ändert. Hierdurch kann eine besonders einfache Montage ermöglicht werden, welche insbesondere werkzeuglos durchgeführt werden kann.

Wenn die Wischleistenhalteeinheit wenigstens eine zusammenhängende Anschlagsfläche aufweist, welche in wenigstens einem montierten Zustand eine Drehbewegung der Adaptereinheit relativ zur Wischleistenhalteeinheit in wenigstens eine Drehrichtung begrenzt, kann eine Montage des Wischarms an der Adaptereinheit vorteilhaft vereinfacht werden, da eine Verdrehung der Adaptereinheit relativ zur Wischleistenhalteeinheit während der Montage vermieden werden kann. Vorzugsweise erfolgt eine Begrenzung der Drehbewegung durch einen unmittelbaren Anschlag der Adaptereinheit an der Wischleistenhalteeinheit. Vorzugsweise begrenzt die Anschlagsfläche die Drehbewegung der Adaptereinheit relativ zur Wischleistenhalteeinheit in beide Drehrichtungen. Hierdurch kann die Montage besonders vorteilhaft vereinfacht werden, da ein zu starkes Verdrehen der Adaptiereinheit relativ zur Wischleistenhalteeinheit verhindert werden kann.

Nach der Erfindung wird vorgeschlagen, dass die Adaptereinheit wenigstens eine, von dem zweiten Lagerelement verschieden ausgebildete Rastverbindungseinheit aufweist, welche zu einer Verbindung mit einem Wischarm vorgesehen ist. Unter einer "Rastverbindungseinheit" soll in diesem Zusammenhang insbesondere eine Einheit verstanden werden, welche zumindest ein Rastverbindungselement umfasst. Hierdurch kann eine Montage der Adaptereinheit am Wischarm vorteilhaft einfach gestaltet werden. Insbesondere kann die Montage werkzeuglos erfolgen. Vorzugsweise ist eine Rastverbindung zwischen dem Wischarm und der Adaptereinheit derart beschaffen, dass eine Montage insbesondere werkzeuglos erfolgen kann, eine Demontage hingegen lediglich mit Hilfe eines Werkzeugs durchgeführt werden kann. Hierdurch kann eine Wahrscheinlichkeit eines Verlusts des Wischblatts, insbesondere durch Diebstahl, verringert werden.

Nach der Erfindung weist die Adaptereinheit eine Außenform auf, welche zumindest teilweise an eine Form eines Endbereichs eines Wischarms angepasst ist. Unter einer "Außenform" der Adaptereinheit soll insbesondere eine Form einer äußeren, insbesondere in wenigstens einem montierten Zustand dem Wischarm, insbesondere dessen Endbereich, zugewandten Oberfläche der Adaptereinheit verstanden werden. Unter einem "Endbereich" des Wischarms soll insbesondere ein Bereich des Wischarms verstanden werden, welcher zu einer Kontaktierung mit der Adaptereinheit vorgesehen ist. Darunter, dass die Außenform der Adaptereinheit zumindest teilweise an eine Form eines Endbereichs des Wischarms "angepasst" ist, soll insbesondere verstanden werden, dass die Außenform der Adaptereinheit derart beschaffen ist, dass sie in wenigstens einem montierten Zustand mit einem Oberflächenanteil von zumindest 50 %, insbesondere von wenigstens 60 %, vorzugsweise von mindestens 70 % und besonders vorteilhaft von zumindest 80 % unmittelbar am Endbereich des Wischarms anliegt. Hierdurch kann eine vorteilhaft wackelfreie Befestigung der Adaptereinheit am Wischarm bereitgestellt werden.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil eines als Heckwischer ausgebildeten Wischers mit einem Wischarm und einer Wischvorrichtung, welche eine als Mittelbügel ausgebildete Wischleistenhalteeinheit und eine Adaptereinheit umfasst, in einer Draufsicht,
- Fig. 2: die Wischleistenhalteeinheit mit einem an der Wischleistenhalteeinheit angeordneten ersten Lagerelement in einer isometrischen Darstellung,
- Fig. 3: die Adaptereinheit in einer isometrischen Darstellung,
- Fig. 4: die Adaptereinheit mit dem zweiten Lagerelement in einer isometrischen Schnittdarstellung,
- Fig. 5: einen Teil der Wischvorrichtung in einer seitlichen Schnittdarstellung,
- Fig. 6: einen Schritt einer Montage des Wischarms an der Adaptereinheit,
- Fig. 7: einen montierten Zustand des Wischarms an der Adaptereinheit und
- Fig. 8: einen Teil einer alternativen Wischvorrichtung in einer seitlichen Schnittdarstellung.

### Beschreibung der Ausführungsbeispiele

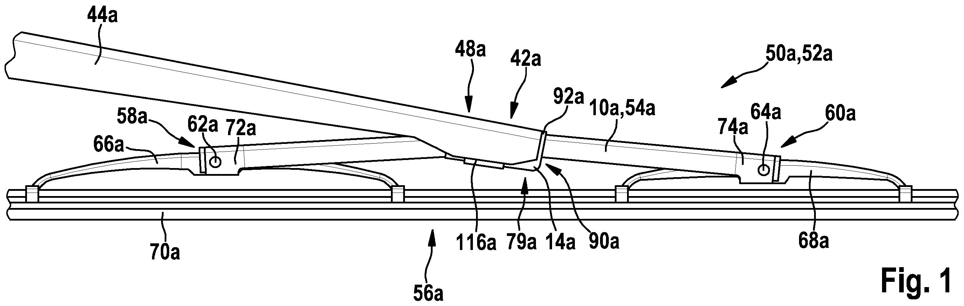

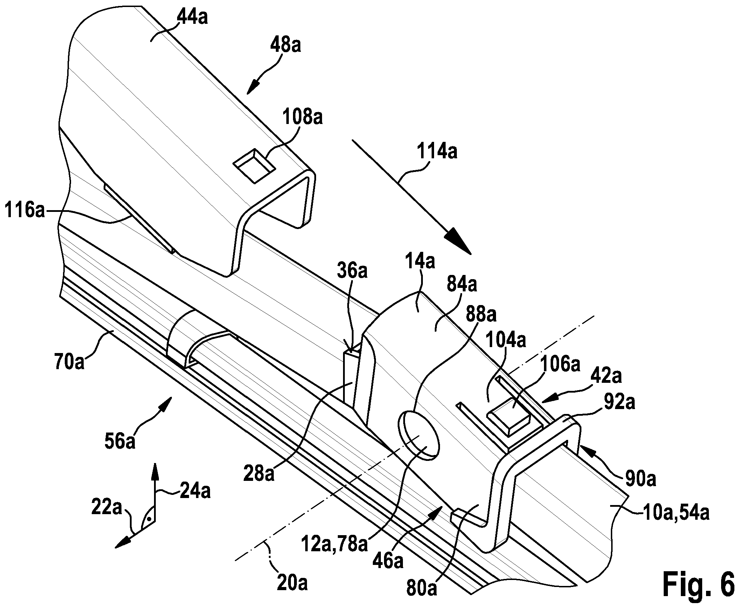

Figur 1 zeigt einen Teil eines als Heckwischer 52a ausgebildeten Wischers 50a mit einem Wischarm 44a und einer Wischvorrichtung in einer Draufsicht. Die Wischvorrichtung umfasst eine Adaptereinheit 14a und ein Wischblatt 56a. Das Wischblatt 56a umfasst eine Wischleistenhalteeinheit 10a. Die Adaptereinheit 14a ist in einem montierten Zustand fest mit dem Wischarm 44a verbunden. Die Adaptereinheit 14a ist im montierten Zustand drehbar um eine Drehachse 20a mit der Wischleistenhalteeinheit 10a verbunden (vgl. Figur 6). Die Wischleistenhalteeinheit 10a ist im montierten Zustand, in einer Längsrichtung der Wischleistenhalteeinheit 10a betrachtet, in einem mittleren Bereich mit der Adaptereinheit 14a drehbar verbunden. Die Wischleistenhalteeinheit 10a ist im montierten Zustand an ihren beiden Enden 58a, 60a jeweils über ein Gelenk 62a, 64a mit einem Krallenbügel 66a, 68a verbunden. Die Krallenbügel 66a, 68a sind in bekannter Weise dazu vorgesehen, eine an einer Federleiste angeordnete Wischleiste 70a zu fixieren.

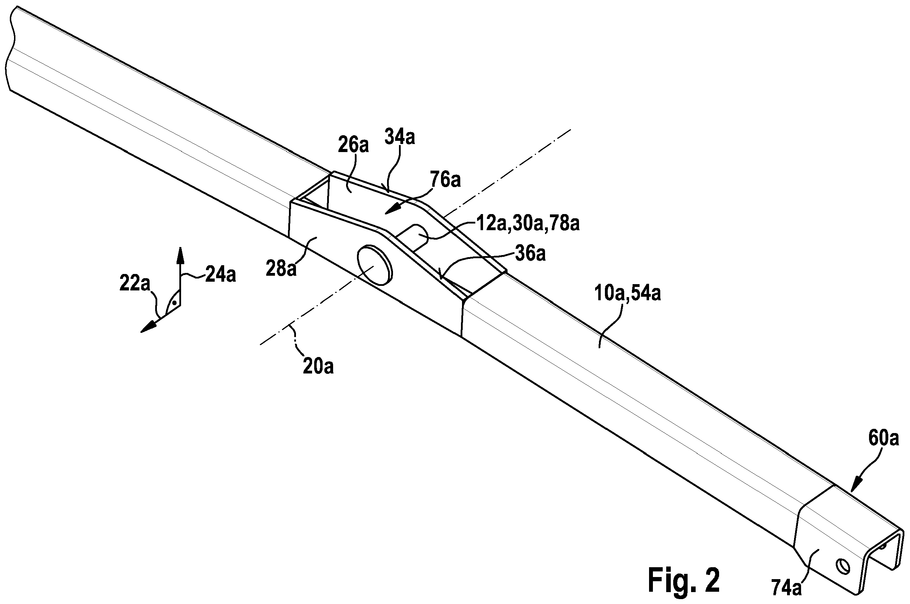

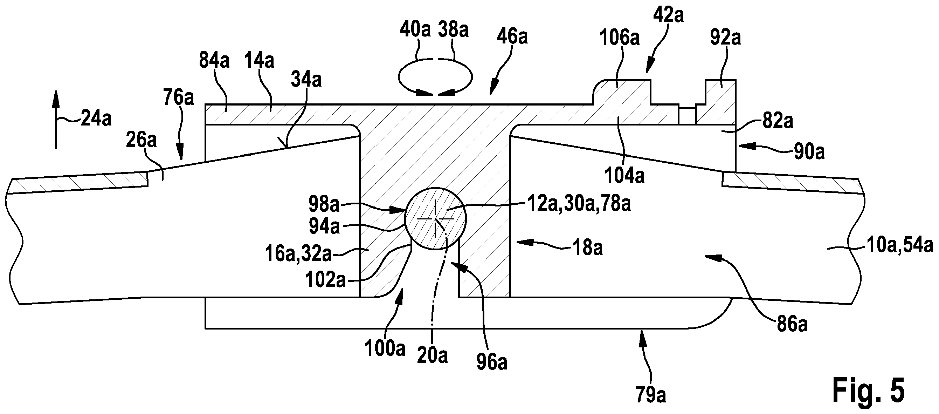

Figur 2 zeigt einen vormontierten Zustand der Wischleistenhalteeinheit 10a mit einem an der Wischleistenhalteeinheit 10a angeordneten ersten Lagerelement 12a in einer isometrischen Darstellung. Die Wischleistenhalteeinheit 10a ist als ein Mittelbügel 54a ausgebildet. Die Wischleistenhalteeinheit 10a besteht aus Metall. Die Wischleistenhalteeinheit 10a weist an ihren beiden Enden 58a, 60a jeweils eine Gelenkaufnahme 72a, 74a zu einer Verbindung mit den Krallenbügeln 66a, 68a auf. Im mittleren Bereich ist die Wischleistenhalteeinheit 10a auf einer im montierten Zustand von der Wischleiste 70a abgewandten Oberseite 76a offen ausgebildet. In diesem Bereich weist die Wischleistenhalteeinheit 10a zwei jeweils zur Drehachse 20a senkrechte Seitenwände 26a, 28a auf. Jede der Seitenwände 26a, 28a umfasst eine Ausnehmung, in welcher das erste Lagerelement 12a angeordnet ist. Das erste Lagerelement 12a ist als ein Nietstift 78 ausgebildet. Das erste Lagerelement 12a besteht aus Metall. Das erste Lagerelement 12a ist zumindest teilweise als ein Lagerbolzen 30a ausgebildet. Somit ist das erste Lagerelement 12a im vormontierten Zustand fest mit der Wischleistenhalteeinheit 10a verbunden. Das erste Lagerelement 12a ist Teil eines Drehlagers 18a, welches im montierten Zustand die Adaptereinheit 14a um die Drehachse 20a drehbar mit der Wischleistenhalteeinheit 10a verbindet (vgl. Figuren 5 und 6).

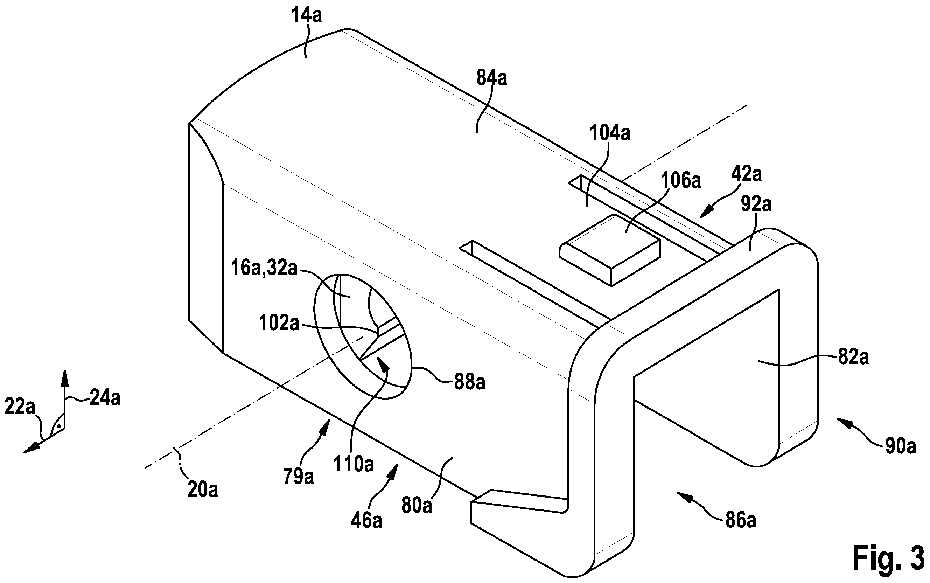

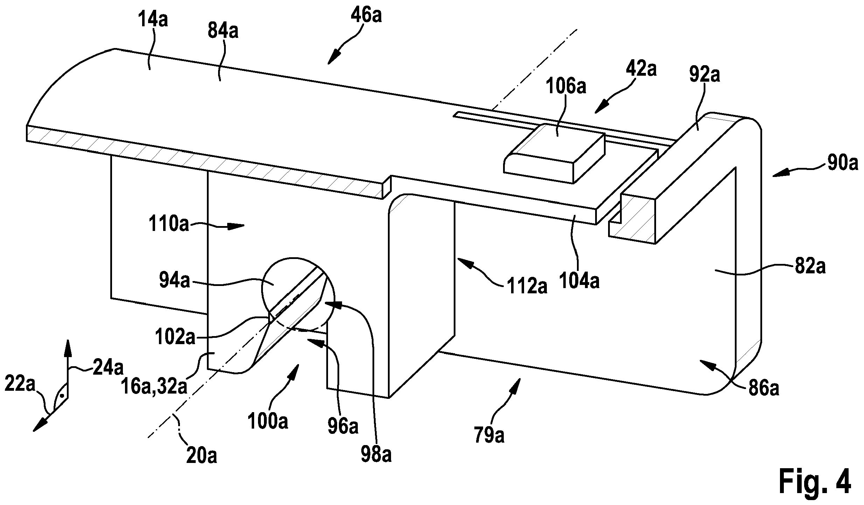

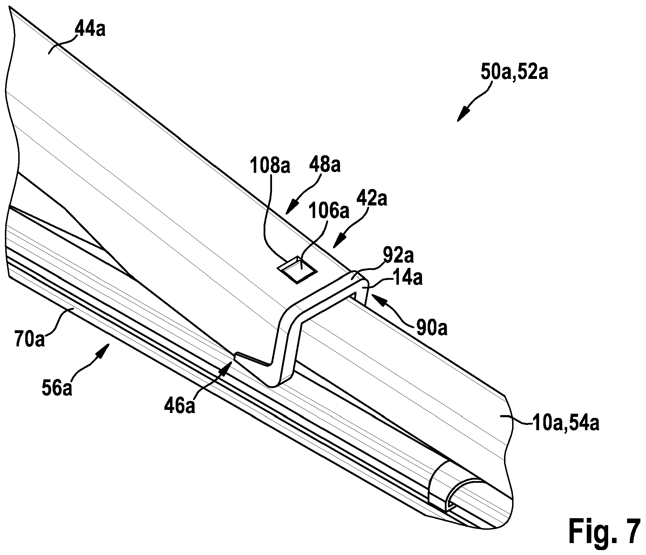

Figur 3 zeigt die Adaptereinheit 14a in einer isometrischen Darstellung, Figur 4 in einer isometrischen Teilschnittdarstellung. Die Adaptereinheit 14a ist einstückig ausgebildet. Die Adaptereinheit 14a besteht aus einem Kunststoff. Die Adaptereinheit 14a weist zumindest im Wesentlichen eine quaderförmige Außenkontur auf. In einem Querschnitt betrachtet ist die Adaptereinheit 14a zumindest im Wesentlichen U-förmig ausgebildet, wobei im montierten Zustand insbesondere eine offene Unterseite 79a der Adaptereinheit 14a der Wischleiste 70a zugewandt ist. Die Adaptereinheit 14a umfasst zwei Seitenwände 80a, 82a und eine Deckwandung 84a. Haupterstreckungsebenen der Seitenwände 80a, 82a sind parallel zueinander ausgebildet. Die Deckwandung 84a ist senkrecht zu den Seitenwänden 80a, 82a angeordnet. Zwischen den Seitenwänden 80a, 82a ist ein Aufnahmebereich 86a für die Wischleistenhalteeinheit 10a gebildet. Die Seitenwände 80a, 82a weisen jeweils eine Ausnehmung 88a auf, wobei in den Figuren jeweils nur eine sichtbar ist. Die Ausnehmungen 88a sind jeweils kreisförmig. Die Ausnehmungen 88a sind miteinander identisch. Die Ausnehmungen 88a sind koaxial zueinander angeordnet. Auf einer im montierten Zustand vom Wischarm 44a abgewandten Stirnseite 90a weist die Adaptereinheit 14a einen umlaufenden Kragen 92a auf. Die Adaptereinheit 14a umfasst eine Rastverbindungseinheit 42a, welche zu einer Verbindung mit dem Wischarm 44a vorgesehen ist. Die Rastverbindungseinheit 42a umfasst eine Rastzunge 104a und eine an der Rastzunge 104a angeformte Rastnase 106a. Die Rastzunge 104a ist in der Deckwandung 84a angeformt. Die Rastnase 106a steht über die Deckwandung 84a in einer von der Unterseite 79a abgewandten Richtung hervor. Die Rastnase 106a ist zumindest im Wesentlichen quaderförmig ausgebildet. Eine vom Kragen 92a und von der Deckwandung 84a abgewandte Kante der Rastnase 106a ist abgerundet. Die Rastnase 106a greift im montierten Zustand in eine korrespondierende Rastaufnahme 108a in einem Endbereich 48a des Wischarms 44a ein (vgl. Figur 7). Die Adaptereinheit 14a weist eine Außenform 46a auf, welche zumindest teilweise an eine Form des Endbereichs 48a des Wischarms 44a angepasst ist. Insbesondere ist die Außenform 46a der Adaptereinheit 14a an eine innere Oberfläche des Endbereichs 48a, insbesondere an die im montierten Zustand der Adaptereinheit 14a zugewandte Oberfläche, angepasst.

An der Adaptereinheit 14a ist einstückig ein zweites Lagerelement 16a angeformt. Das zweite Lagerelement 16a umfasst eine Lagerschale 94a. Das erste Lagerelement 12a und das zweite Lagerelement 16a bilden im montierten Zustand das Drehlager 18a. Das zweite Lagerelement 16a ist zumindest teilweise als ein Rastverbindungselement 32a ausgebildet. Das zweite Lagerelement 16a ist zumindest im Wesentlichen quaderförmig ausgebildet und umfasst insbesondere auf einer der Unterseite 79a zugewandten Seite eine parallel zur Deckwandung 84a und parallel zur Stirnseite 90a durchgehende Lagerausnehmung 96a. Die Lagerausnehmung 96a ist als eine Randausnehmung ausgebildet, welche in Richtung der Unterseite 79a begrenzungsfrei ist. Die Lagerausnehmung 96a weist einen zylinderförmigen Lagerbereich 98a und einen Einführbereich 100a auf, welcher den Lagerbereich 98a mit der Umgebung verbindet. Die Lagerschale 94a begrenzt den Lagerbereich 98a zumindest teilweise. Das zweite Lagerelement 16a weist eine angeformte Nase 102a auf, welche die Lagerausnehmung 96a an einer Stelle verengt. Bei einer Montage wird das erste Lagerelement 12a von der Unterseite 79a her in die Lagerausnehmung 96a des zweiten Lagerelements 16a eingeführt und hinter der Nase 102a verrastet. Im montierten Zustand füllt der Lagerbolzen 30a den Lagerbereich 98a vollständig aus. Das zweite Lagerelement 16a ist jeweils von den Seitenwänden 80a, 82a der Adaptereinheit 14a beabstandet. Zwischen den Seitenwänden 80a, 82a und dem zweiten Lagerelement 16a existiert jeweils ein Aufnahmebereich 110a, 112a für jeweils eine der Seitenwände 26a, 28a der Wischleistenhalteeinheit 10a.

Figur 5 zeigt einen Teil der Wischvorrichtung in einer seitlichen Schnittdarstellung. Im montierten Zustand umgreift die Adaptereinheit 14a die Wischleistenhalteeinheit 10a in einer zur Drehachse 20a parallelen Richtung 22a zumindest teilweise (vgl. auch Figur 6). Ferner umgreift das zweite Lagerelement 16a das erste Lagerelement 12a in wenigstens einer zur Drehachse 20a senkrechten Richtung 24a zumindest teilweise. Die Seitenwände 26a, 28a der Wischleistenhalteeinheit 10a sind von der Adaptereinheit 14a einzeln in wenigstens einem montierten Zustand in einer zur Drehachse 20a parallelen Richtung 22a zumindest teilweise umgriffen. Somit taucht das zweite Lagerelement 16a der Adaptereinheit 14a im montierten Zustand zwischen die Seitenwände 26a, 28a der Wischleistenhalteeinheit 10a ein. Die Wischleistenhalteeinheit 10a weist zwei jeweils zusammenhängende Anschlagsflächen 34a, 36a auf (vgl. auch Figur 2). Bei den Anschlagsflächen 34a, 36a handelt es sich um im montierten Zustand von der Wischleiste 70a abgewandte Oberflächen der Seitenwände 26a, 28a. Die Anschlagsflächen 34a, 36a begrenzen im montierten Zustand eine Drehbewegung der Adaptereinheit 14a relativ zur Wischleistenhalteeinheit 10a in beide Drehrichtungen 38a, 40a insbesondere durch einen Anschlag der Deckwandung 84a an die Anschlagsflächen 34a, 36a.

Figur 6 zeigt einen Schritt einer Montage des Wischarms 44a an der Adaptereinheit 14a. Bei der Montage des Wischarms 44a an die Adaptereinheit 14a wird der Wischarm 44a in eine zur Drehachse 20a senkrechte und zur Deckwandung 84a der Adaptereinheit 14a parallele Richtung 114a auf die Adaptereinheit 14a aufgesteckt. Hierzu weist der Wischarm 44a am Endbereich 48a beidseitig je einen Haltesteg 116a auf, wobei in den Figuren lediglich einer sichtbar ist, und welcher jeweils die Adaptereinheit 14a im montierten Zustand umgreift und an der Unterseite 79a der Adaptereinheit 14a anliegt (vgl. Figur 1). Bei einem Aufstecken des Wischarms 44a auf die Adaptereinheit 14a wird die Rastzunge 104a der Adaptereinheit 14a in Richtung der Unterseite 79a verformt, bis die Rastnase 106a in die Rastaufnahme 108a im Endbereich 48a des Wischarms 44a einrastet. Der montierte Zustand ist in Figur 7 gezeigt. Im montierten Zustand liegt der Wischarm 44a stirnseitig am Kragen 92a der Adaptereinheit 14a an. Eine Größe der Rastnase 106a und dazu korrespondierend eine Größe der Rastaufnahme 108a sind derart bemessen, dass eine Rastverbindung zwischen beiden lediglich mit Hilfe von Werkzeug aufhebbar ist.

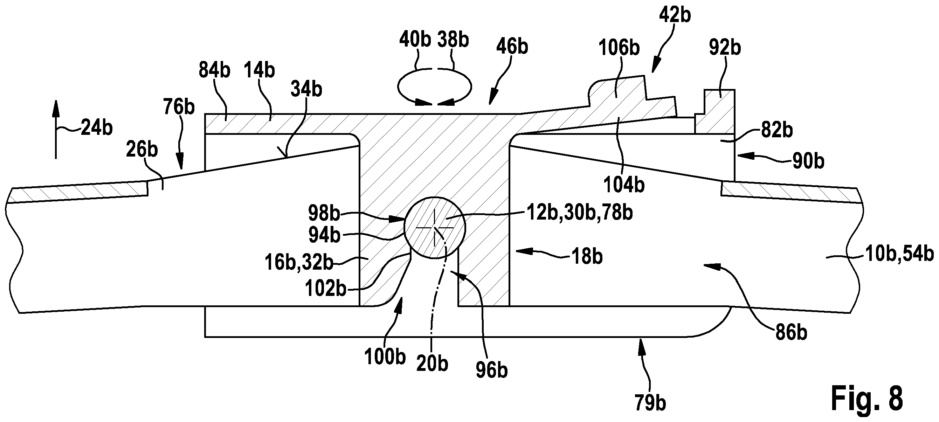

In der Figur 8 ist ein weiteres Ausführungsbeispiel der Erfindung gezeigt. Die nachfolgende Beschreibung beschränkt sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 7 verwiesen werden kann. Zur Unterscheidung der Ausführungsbeispiele ist der Buchstabe a in den Bezugszeichen des Ausführungsbeispiels in den Figuren 1 bis 7 durch den Buchstaben b in den Bezugszeichen des Ausführungsbeispiels der Figur 8 ersetzt. Bezüglich gleich bezeichneter Bauteile, insbesondere in Bezug auf Bauteile mit gleichen Bezugszeichen, kann grundsätzlich auch auf die Figuren und/oder die Beschreibung des Ausführungsbeispiels der Figuren 1 bis 7 verwiesen werden.

Figur 8 zeigt eine weitere Wischvorrichtung mit einer Adaptereinheit 14b mit einer alternativen Rastverbindungseinheit 42b in einer seitlichen Schnittdarstellung. Eine Rastzunge 104b der Rastverbindungseinheit 42b ist in eine von einer Unterseite 79b der Adaptereinheit 14b abgewandte Richtung aus einer Haupterstreckungsebene einer Deckwandung 84b heraus gebogen. Ein Biegewinkel liegt bei ungefähr 5°. Hierdurch kann eine Vorspannung einer Rastverbindung zwischen einem Wischarm 44b und der Adaptereinheit 14b vergrößert werden. Ferner kann sichergestellt werden, dass eine Rastverbindung zwischen einem ersten Lagerelement 12b und einem zweiten Lagerelement 16b während eines Herstellens der Rastverbindung zwischen dem Wischarm 44b und der Adaptereinheit 14b bestehen bleibt, da insbesondere durch eine spezielle Geometrie bei der Herstellung der Rastverbindung eine eine Lagerausnehmung 96b verengende Kraft erzeugt wird.

## Patentansprüche

1. Wischvorrichtung, insbesondere Heckwischvorrichtung, mit einer Wischleistenhalteeinheit (10a; 10b), wenigstens einem an der Wischleistenhalteeinheit (10a; 10b) angeordneten ersten Lagerelement (12a; 12b) und einer Adaptereinheit (14a; 14b), welche zumindest ein zweites Lagerelement (16a; 16b) umfasst, das in wenigstens einem montierten Zustand zusammen mit dem ersten Lagerelement (12a; 12b) ein Drehlager (18a; 18b) mit einer Drehachse (20a; 20b) bildet, und welche die Wischleistenhalteeinheit (10a; 10b) in einer zur Drehachse (20a; 20b) zumindest im Wesentlichen parallelen Richtung (22a; 22b) zumindest teilweise umgreift, wobei das zweite Lagerelement (16a; 16b) das erste Lagerelement (12a; 12b) in wenigstens einer zur Drehachse (20a; 20b) zumindest im Wesentlichen senkrechten Richtung (24a; 24b) zumindest teilweise umgreift, wobei die Adaptereinheit (14a; 14b) einstückig ausgebildet ist, aus einem Kunststoff besteht, eine zumindest im Wesentlichen quaderförmige Außenkontur aufweist, im Querschnitt betrachtet zumindest im Wesentlichen U-förmig ausgebildet ist, zwei Seitenwände (80a, 82a; 82b) und eine Deckwandung (84a; 84b) umfasst, wobei die Haupterstreckungsebenen der Seitenwände (80a, 82a; 82b) parallel zueinander ausgebildet sind und die Deckwandung (84a; 84b) senkrecht zu den Seitenwänden (80a, 82a; 82b) angeordnet ist, wobei zwischen den Seitenwänden (80a, 82a; 82b) ein Aufnahmebereich für die Wischleistenhalteeinheit (10a; 10b) gebildet ist, und die Adaptereinheit (14a; 14b) wenigstens eine, von dem zweiten Lagerelement (16a; 16b) verschieden ausgebildete Rastverbindungseinheit (42a; 42b) aufweist, welche zu einer Verbindung mit einem Wischarm (44a; 44b) vorgesehen ist und eine Rastzunge (104a; 104b) und eine an der Rastzunge (104a; 104b) angeformte Rastnase (106a; 106b) umfasst, wobei die Rastzunge (104a; 104b) in der Deckwandung (84a; 84b) angeformt ist und die Rastnase (106a; 106b) über die Deckwandung (84a; 84b) in einer von einer Unterseite (79a) abgewandten Richtung hervorsteht, wobei die Rastnase (106a; 106b) im Wesentlichen quaderförmig ausgebildet ist, wobei die Rastnase (106a; 106b) im montierten Zustand in eine korrespondierende Rastaufnahme (108a) in einem Endbereich (48a) des Wischarms (44a; 44b) eingreift, wobei die Adaptereinheit (14a; 14b) eine Außenform aufweist, welche zumindest teilweise an eine Form des Endbereichs (48a) des Wischarms (44a; 44b) angepasst ist, **dadurch gekennzeichnet, dass** die Adaptereinheit (14a; 14b) auf einer im montierten Zustand vom Wischarm (44a; 44b) abgewandten Stirnseite einen umlaufenden Kragen (92a; 92b) aufweist und eine vom Kragen (92a; 92b) und von der Deckwandung (84a; 84b) abgewandte Kante der Rastnase (106a; 106b) abgerundet ist.

2. Wischvorrichtung nach Anspruch 1, **dadurch gekennzeichnet, dass** die Wischleistenhalteeinheit (10a; 10b) wenigstens zwei zumindest im Wesentlichen zur Drehachse (20a; 20b) senkrechte Seitenwände (26a, 28a; 26b, 28b) umfasst, welche von der Adaptereinheit (14a; 14b) einzeln in wenigstens einem montierten Zustand in einer zur Drehachse (20a; 20b) zumindest im Wesentlichen parallelen Richtung (22a; 22b) zumindest teilweise umgriffen sind.

3. Wischvorrichtung nach Anspruch 1 oder 2, **dadurch gekennzeichnet, dass** das erste Lagerelement (12a; 12b) zumindest teilweise als ein Lagerbolzen (30a; 30b) ausgebildet ist.

4. Wischvorrichtung nach einem der vorhergehenden Ansprüche, **dadurch gekennzeichnet, dass** das erste Lagerelement (12a; 12b) in wenigstens einem vormontierten Zustand zumindest translatorisch wenigstens weitgehend fest mit der Wischleistenhalteeinheit (10a; 10b) verbunden ist.

5. Wischvorrichtung nach einem der vorhergehenden Ansprüche, **dadurch gekennzeichnet, dass** das zweite Lagerelement (16a; 16b) zumindest teilweise als ein Rastverbindungselement (32a; 32b) ausgebildet ist.

6. Wischvorrichtung nach einem der vorhergehenden Ansprüche, **dadurch gekennzeichnet, dass** die Wischleistenhalteeinheit (10a; 10b) wenigstens eine zusammenhängende Anschlagsfläche (34a, 36a; 34b, 36b) aufweist, welche in wenigstens einem montierten Zustand eine Drehbewegung der Adaptereinheit (14a; 14b) relativ zur Wischleistenhalteeinheit (10a; 10b) in wenigstens eine Drehrichtung (38a, 40a; 38b, 40b) begrenzt.

7. Wischer (50a; 50b), insbesondere Heckwischer (52a; 52b), mit einer Wischvorrichtung nach einem der vorhergehenden Ansprüche.

## Claims

1. Wiper device, in particular rear wiper device, with a wiper strip holding unit (10a; 10b), at least one first bearing element (12a; 12b) arranged on the wiper strip holding unit (10a; 10b) and an adapter unit (14a; 14b) which comprises at least one second bearing element (16a; 16b) which, together with the first bearing element (12a; 12b), in at least one mounted state forms a rotary bearing (18a; 18b) with an axis of rotation (20a; 20b) and which at least partially engages around the wiper strip holding unit (10a; 10b) in a direction (22a; 22b) at least substantially parallel to the axis of rotation (20a; 20b), wherein the second bearing element (16a; 16b) at least partially engages around the first bearing element (12a; 12b) in at least one direction (24a; 24b) at least substantially perpendicular to the axis of rotation (20a; 20b), wherein the adapter unit (14a; 14b) is formed integrally, is composed of a plastic, has an at least substantially cuboidal outer contour, is of at least substantially U-shaped design, as viewed in cross section, and comprises two side walls (80a; 82a; 82b) and a top wall (84a; 84b), wherein the planes of main extent of the side walls (80a, 82a; 82b) are formed parallel to each other and the top wall (84a; 84b) is arranged perpendicular to the side walls (80a, 82a; 82b), wherein a receiving region for the wiper strip holding unit (10a; 10b) is formed between the side walls (80a, 82a; 82b), and the adapter unit (14a; 14b) has at least one latching connection unit (42a; 42b) which is different from the second bearing element (16a; 16b), is provided for connection to a wiper arm (44a; 44b) and comprises a latching tongue (104a; 104b) and a latching lug (106a; 106b) which is integrally formed on the latching tongue (104a; 104b), wherein the latching tongue (104a; 104b) is integrally formed in the top wall (84a; 84b) and the latching lug (106a; 106b) protrudes over the top wall (84a; 84b) in a direction facing away from a lower side (79a), wherein the latching lug (106a; 106b) is of substantially cuboidal design, wherein, in the mounted state, the latching lug (106a; 106b) engages in a corresponding latching receptacle (108a) in an end region (48a) of the wiper arm (44a; 44b), wherein the adapter unit (14a; 14b) has an outer shape which is at least partially adapted to a shape of the end region (48a) of the wiper arm (44a; 44b), **characterized in that** the adapter unit (14a; 14b) has an encircling collar (92a; 92b) on an end side facing away from the wiper arm (44a; 44b) in a mounted state, and an edge of the latching lug (106a; 106b) that faces away from the collar (92a; 92b) and from the top wall (84a; 84b) is rounded.

2. Wiper device according to Claim 1, **characterized in that** the wiper strip holding unit (10a; 10b) comprises at least two side walls (26a, 28a; 26b, 28b) which are at least substantially perpendicular to the axis of rotation (20a; 20b) and, in at least one mounted state, are individually at least partially engaged around by the adapter unit (14a; 14b) in a direction (22a; 22b) at least substantially parallel to the axis of rotation (20a; 20b).

3. Wiper device according to Claim 1 or 2, **characterized in that** the first bearing element (12a; 12b) is at least partially designed as a bearing bolt (30a; 30b).

4. Wiper device according to one of the preceding claims, **characterized in that**, in at least one preassembled state, the first bearing element (12a; 12b) is at least substantially fixed at least in terms of translation to the wiper strip holding unit (10a; 10b).

5. Wiper device according to one of the preceding claims, **characterized in that** the second bearing element (16a; 16b) is at least partially designed as a latching connecting element (32a; 32b).

6. Wiper device according to one of the preceding claims, **characterized in that** the wiper strip holding unit (10a; 10b) has at least one continuous stop surface (34a, 36a; 34b, 36b) which, in at least one mounted state, limits a rotational movement of the adapter unit (14a; 14b) relative to the wiper strip holding unit (10a; 10b) in at least one direction of rotation (38a, 40a; 38b, 40b).

7. Wiper (50a; 50b), in particular rear wiper (52a; 52b), with a wiper device according to one of the preceding claims.

## Revendications

1. Dispositif d'essuie-glace, en particulier dispositif d'essuie-glace de vitre arrière, comprenant une unité de retenue de raclette de balai d'essuie-glace (10a ; 10b), au moins un premier élément de palier (12a ; 12b) disposé sur l'unité de retenue de raclette de balai d'essuie-glace (10a ; 10b) et une unité d'adaptateur (14a ; 14b) qui comprend au moins un deuxième élément de palier (16a ; 16b) qui forme, dans au moins un état monté, conjointement avec le premier élément de palier (12a ; 12b), un palier pivotant (18a ; 18b) avec un axe de rotation (20a ; 20b), et qui vient en prise au moins en partie autour de l'unité de retenue de raclette de balai d'essuie-glace (10a ; 10b) dans une direction (22a ; 22b) au moins essentiellement parallèle à l'axe de rotation (20a ; 20b), le deuxième élément de palier (16a ; 16b) venant en prise au moins en partie autour du premier élément de palier (12a ; 12b) dans au moins une direction (24a ; 24b) au moins essentiellement perpendiculaire à l'axe de rotation (20a ; 20b), l'unité d'adaptateur (14a ; 14b) étant réalisée d'une seule pièce, se composant d'une matière plastique, présentant un contour extérieur au moins essentiellement parallélépipédique, considérée en section transversale étant réalisée au moins essentiellement en forme de U, comprenant deux parois latérales (80a, 82a ; 82b) et une paroi de recouvrement (84a ; 84b), les plans d'étendue principaux des parois latérales (80a, 82a ; 82b) étant réalisés parallèlement l'un à l'autre et la paroi de recouvrement (84a ; 84b) étant disposée perpendiculairement aux parois latérales (80a, 82a ; 82b), une région de réception pour l'unité de retenue de raclette de balai d'essuie-glace (10a ; 10b) étant formée entre les parois latérales (80a, 82a ; 82b), et l'unité d'adaptateur (14a ; 14b) présentant au moins une unité de connexion par encliquetage (42a ; 42b) réalisée de manière différente du deuxième élément de palier (16a ; 16b), laquelle est prévue pour une connexion avec un bras d'essuie-glace (44a ; 44b) et comprend une languette d'encliquetage (104a ; 104b) et un ergot d'encliquetage (106a ; 106b) formé sur la languette d'encliquetage (104a ; 104b), la languette d'encliquetage (104a ; 104b) étant formée dans la paroi de recouvrement (84a ; 84b) et l'ergot d'encliquetage (106a ; 106b) faisant saillie au-delà de la paroi de recouvrement (84a ; 84b) dans une direction opposée à un côté inférieur (79a), la roue d'encliquetage (106a ; 106b) étant réalisée essentiellement sous forme parallélépipédique, l'ergot d'encliquetage (106a ; 106b), dans l'état monté, venant en prise dans un logement d'encliquetage correspondant (108a) dans une région d'extrémité (48a) du bras d'essuie-glace (44a ; 44b), l'unité d'adaptateur (14a ; 14b) présentant une forme extérieure qui est adaptée au moins en partie à une forme de la région d'extrémité (48a) du bras d'essuie-glace (44a ; 44b), **caractérisé en ce que** l'unité d'adaptateur (14a ; 14b) présente, sur un côté frontal opposé, dans l'état monté, au bras d'essuie-glace (44a ; 44b), un rebord périphérique (92a ; 92b) et une arête de l'arbre d'encliquetage (106a ; 106b) opposée au rebord (92a ; 92b) et à la paroi de recouvrement (84a ; 84b) étant arrondie.

2. Dispositif d'essuie-glace selon la revendication 1, **caractérisé en ce que** l'unité de retenue de raclette de balai d'essuie-glace (10a ; 10b) comprend au moins deux parois latérales (26a, 28a ; 26b, 28b) au moins essentiellement perpendiculaires à l'axe de rotation (20a ; 20b) qui sont au moins en partie saisies sur leur pourtour par l'unité d'adaptateur (14a ; 14b) individuellement dans au moins un état monté dans une direction (22a ; 22b) au moins essentiellement parallèle à l'axe de rotation (20a ; 20b).

3. Dispositif d'essuie-glace selon la revendication 1 ou 2, **caractérisé en ce que** le premier élément de palier (12a ; 12b) est réalisé au moins en partie sous forme de boulon de palier (30a ; 30b).

4. Dispositif d'essuie-glace selon l'une quelconque des revendications précédentes, **caractérisé en ce que** le premier élément de palier (12a ; 12b), dans au moins un état prémonté, est connecté au moins en translation au moins essentiellement fixement à l'unité de retenue de raclette de balai d'essuie-glace (10a ; 10b).

5. Dispositif d'essuie-glace selon l'une quelconque des revendications précédentes, **caractérisé en ce que** le deuxième élément de palier (16a ; 16b) est réalisé au moins en partie sous forme d'élément de connexion par encliquetage (32a ; 32b).

6. Dispositif d'essuie-glace selon l'une quelconque des revendications précédentes, **caractérisé en ce que** l'unité de retenue de raclette de balai d'essuie-glace (10a ; 10b) présente au moins une surface de butée continue (34a, 36a ; 34b, 36b) qui, dans au moins un état monté, limite un mouvement de rotation de l'unité d'adaptateur (14a ; 14b) par rapport à l'unité de retenue de raclette de balai d'essuie-glace (10a ; 10b) dans au moins un sens de rotation (38a, 40a ; 38b, 40b).

7. Essuie-glace (50a ; 50b), en particulier essuie-glace de vitre arrière (52a ; 52b), comprenant un dispositif d'essuie-glace selon l'une quelconque des revendications précédentes.
